**Europäisches Patentamt**

**European Patent Office**

**Office européen des brevets**

(19)

(11) Veröffentlichungsnummer: **0 036 558**
**A1**

(12) # EUROPÄISCHE PATENTANMELDUNG

(21) Anmeldenummer: **81101753.2**

(22) Anmeldetag: **10.03.81**

(51) Int. Cl.³: **C 23 D 5/00**, C 23 D 5/10, C 03 C 7/00, C 25 D 13/02

(30) Priorität: **22.03.80 DE 3011081**
**24.06.80 DE 3023554**

(43) Veröffentlichungstag der Anmeldung: **30.09.81**
**Patentblatt 81/39**

(84) Benannte Vertragsstaaten: **BE DE FR GB IT NL**

(71) Anmelder: **BAYER AG, Zentralbereich Patente, Marken und Lizenzen, D-5090 Leverkusen 1, Bayerwerk (DE)**

(72) Erfinder: **Wagner, Gebhard, Dr., Ackerstrasse 31, D-5068 Odenthal (DE)**
Erfinder: **Krist, Otto, Grosshurdener Berg 8, D-5063 Overath (DE)**

(54) **Beschichteter Metallgegenstand und Verfahren zu dessen Herstellung.**

(57) Es wird ein beschichteter Metallgegenstand mit geschlossener Oberfläche und Verfahren zu dessen Herstellung beschrieben, wobei die Beschichtung aus einer ersten Schicht aus einem Cermet und einer zweiten, chemisch und korrosions-beständigen silikatischen Glasur besteht.

EP 0 036 558 A1

0036558

BAYER AKTIENGESELLSCHAFT    5090 Leverkusen, Bayerwerk
Zentralbereich
Patente, Marken und Lizenzen   Dp/kl

Beschichteter Metallgegenstand und Verfahren zu dessen
Herstellung

Die Erfindung betrifft Metallgegenstände mit hochtem-
peratur-, temperaturwechselbeständigen und schwingungsrißbeständigen anorganischen metallpulverhaltigen Schutzschichten, die metallische Werkstoffe vor Korrosion
schützen.

Der Schutz metallischer Werkstücke, die hohen Temperaturen und raschem Temperaturwechsel ausgesetzt sind,
vor korrosiven Dämpfen und Flüssigkeiten ist bisher
technisch nicht befriedigend gelöst. Derartige Probleme
treten z.B. bei Verbrennungsanlagen auf, wenn diese
durch Taupunktunterschreitungen mit sauren oder salzhaltigen Aerosolen oder Kondensaten in Berührung kommen. Als Beispiel hierfür werden Heizkessel, Wärmetauscher, Abgasleitungen und Abgasschalldämpfer, genannt. Es wurde versucht, Metalle durch temperatur-
und korrosionsbeständige Emailüberzüge zu schützen.
Diese versagen jedoch bei Dauertemperatur über 600°C
und bei raschem Temperaturwechsel. An den dabei entstehenden Rissen setzt dann die Korrosion ein.

Le A 19 422-Ausland

Es wurde auch bereits vorgeschlagen, sogenannte Cermetbeschichtungen einzusetzen. Dabei wird insbesondere die hohe Duktilität solcher Systeme in Verbindung mit der katalytischen Wirkung der porösen Oberfläche für Oxidations- und Crackprozesse ausgenutzt.

So wird z.B. in der US-Patentschrift 3 203 815 vorgeschlagen, Metall durch ein Gemisch aus einer bleihaltigen Fritte, Aluminiumpulver und Acrylharzen zu schützen, welches bei Temperaturen um 800°C auf das Metallsubstrat aufgeschmolzen wird. Die dabei entstehende Schicht ist temperaturbeständig, wird jedoch durch kochende verdünnte Zitronensäure-Lösung (DIN 51 151) bereits nach kurzer Zeit vollkommen zerstört.

In der GB-PS 1 498 810 wird ein ähnliches System beschrieben, das aus einem Bleiborat, Aluminiumpulver und ebenfalls einem organischen Acrylharz besteht.

Aus der US-PS 3 706 579 wurden Metallkeramik-Schutzüberzugsmassen bekannt, bei denen eine zunächst homogene Glasmasse eingesetzt wird, die beim erneuten Brennen 2 flüssige Phasen bildet.

Obwohl mit solchen Systemen der Korrosionsschutz wegen der besseren Beständigkeit gegen Rißbildung der Beschichtung gegenüber Email- und Glasursystemen verbessert wird, wurde die Beständigkeit der Emails und/oder Glasuren an sich gegenüber chemischen Angriff und Korrosion bisher nicht erreicht.

Aufgabe der vorliegenden Erfindung ist es nun, beschichtete Metallgegenstände zur Verfügung zu stellen, bei denen die Beschichtung sowohl die hohe Schwingungsfestigkeit und Rißunempfindlichkeit der Cermets, als auch die Widerstandsfähigkeit von Glasuren gegen chemischen Angriff aufweisen.

Gegenstand der vorliegenden Erfindung ist daher ein beschichteter Metallgegenstand mit geschlossener Oberfläche, gekennzeichnet durch eine erste Schicht aus einem Cermet und eine zweite, darüberliegende chemisch und korrosionsbeständige silikatische Glasur-Schicht.

Als Cermets sind die bekannten Keramik-Metall-Beschichtungen, die durch Einbrennen einer mit Metallteilchen, insbesondere Aluminiumteilchen vermischten Keramik-, Email- und/oder Glasurfritte erhalten werden, geeignet. Die eingebrannte Cermet-Schicht stellt im allgemeinen ein porenreiches Zweiphasen-System dar, in dem die Metallphase und die anorganische oxidische Phase nebeneinander vorliegen. Die anorganische oxidische Phase bildet im allgemeinen die disperse Phase, in der diskrete metallische Teilchen enthalten sind. Besonders bevorzugt werden Cermets entsprechend der Europäischen Patentanmeldung Nr. 80100106 eingesetzt.

Erfindungsgemäß wird nun die zum Teil offenporige, rauhe Oberfläche der Cermetbeschichtung durch eine korrosionsbeständige silikatische Glasur-Schicht "versiegelt". Dabei gleicht die oberflächliche Glasur-Schicht die Oberflächenrauhigkeit der Cermet-Schicht durch Abschluß von

Le A 19 422

Poren bzw. Ausfüllung von Rautiefen derart ab, daß eine geschlossene Oberfläche entsteht.

Die Dicke der Glasur-Schicht soll erfindungsgemäß so bemessen sein, daß eine genügende Elastizität erhalten bleibt zur Gewährleistung einer hinreichenden Schwingungsrißunempfindlichkeit. Die geringe Dicke der Glasur-Schicht soll gewährleisten, daß die Glasur-Schicht sich nicht vom Cermet ablöst. Bevorzugt beträgt die durchschnittliche Schichtdicke der Glasur zwischen 15 und 25 /um. Eine Mindestdicke von 5 /um soll nicht unterschritten werden.

Im Prinzip sind zur Erzeugung der silikatischen Glasur alle Glasurfritten erfindungsgemäß einsetzbar, die die darunter liegende Cermet-Schicht benetzen und beim Einbrennen eine geschlossene Schicht bilden. Durch die spezielle Auswahl einer silikatischen Glasurfritte ist es möglich, das Eigenschaftsbild der Beschichtung schwerpunktmäßig zu beeinflussen. Wird z.B. als Schwerpunkteigenschaft insbesondere eine gute Säurebeständigkeit verlangt, werden erfindungsgemäß vorzugsweise im wesentlichen nicht kristallisierende silikatische Glasuren gewählt. Insbesondere können auch Kombinationen mehrerer nicht kristallisierender Fritten zur Erzeugung der Glasur eingesetzt werden. Wird andererseits als Schwerpunkteigenschaft eine besondere mechanische Widerstandsfähigkeit verlangt, werden erfindungsgemäß vorzugsweise kristallisierende Fritten, die eine Glasurschicht mit innerer

Le A 19 422

- 5 -

Druckvorspannung erzeugen, gewählt. Hierdurch wird insbesondere eine verstärkte Widerstandsfähigkeit gegen Schlag-, Stoß- und Scherkräfte, sowie gegen Temperaturwechselbeanspruchung bewirkt. Für solche kristallisierenden Glasuren werden insbesondere Spodumen- oder ß-Eukryptit-ausscheidende Fritten eingesetzt. Zur Gewährleistung der Benetzung und Ausbildung geschlossener Schichten werden solche kristallisierende Fritten vorzugsweise auch in Mischung mit nicht kristallisierenden silikatischen Glasurfritten eingesetzt. Hierbei ist es dann möglich, das Eigenschaftsbild der Beschichtung in weiten Grenzen beliebig zu variieren.

Erfindungsgemäß einzusetzende, nicht kristallisierende silikatische Glasurfritten weisen vorzugsweise folgende Zusammensetzung auf:

| | |
|---|---|
| $SiO_2$ | 40 - 65 Gew.-% |
| $B_2O_3$ | 0 - 20 Gew.-% |
| $Al_2O_3$ | 0 - 5 Gew.-% |
| Alkalioxide | 10 - 35 Gew.-% |
| Erdalkalioxide | 0 - 20 Gew.-% |
| $TiO_2$ und/oder $ZrO_2$ | 0 - 20 Gew.-% |
| $P_2O_5$ | 0 - 2 Gew.-% |
| $V_2O_5$ und/oder $MoO_3$ | 0 - 3 Gew.-% |
| F | 0 - 5 Gew.-%. |

Erfindungsgemäß einzusetzende kristallisierende silikatische Glasurfritten weisen vorzugsweise folgende Zusammensetzung auf:

SiO$_2$ 45 - 70 Gew.-%, vorzugsweise 50 - 65 Gew.-%
B$_2$O$_3$ 0 - 10 Gew.-%, vorzugsweise 0 - 8 Gew.-%
Al$_2$O$_3$ 8 - 20 Gew.-%, vorzugsweise 10 - 15 Gew.-%
Li$_2$O 5 - 20 Gew.-%, vorzugsweise 8 - 15 Gew.-%
Na$_2$O + K$_2$O 0 - 10 Gew.-%, vorzugsweise 0 - 5 Gew.-%
Erdalkalioxide 3 - 20 Gew.-%, vorzugsweise 5 - 15 Gew.-%
TiO$_2$ und/oder ZrO$_2$ 0 - 15 Gew.-%, vorzugsweise 8 - 12 Gew.-%
P$_2$O$_5$ 0 - 7 Gew.-%, vorzugsweise 2 - 5 Gew.-%
F 0 - 5 Gew.-%, vorzugsweise 1 - 5 Gew.-%

Die silikatischen Glasuren können ferner färbende Schwermetalloxide in Mengen von 0 bis 8 Gew.-% enthalten. Als
färbende Schwermetalloxide kommen insbesondere die Oxide
des Eisens, Mangans, Kupfers, Kobalts, Nickels und/oder
Chroms in Frage.

Für die Herstellung des beschichteten Metallgegenstandes werden die üblichen Zweischicht-Emailliertechniken angewandt. Danach wird auf den Metallgegenstand zunächst ein das Cermet erzeugendes erstes
System aufgetragen und gegebenenfalls nach Einbrand
des ersten Systems ein zweites, die Glasur erzeugendes
System aufgetragen und eingebrannt.

Die Systeme können als wäßrige Schlicker bestehend aus
der Fritte, üblichen Schlickerzusätzen und Wasser, wobei
das erste System zusätzlich die Metallteilchen enthält,
aufgetragen werden. Bei Anwendung der üblichen Tauch- oder
Spritztechnik kann das erste System zunächst getrocknet
werden und danach der wäßrige Schlicker des zweiten
Systems aufgetragen werden und beide Systeme gemeinsam
eingebrannt werden (2-Schicht-1-Brand).

Le A 19 422

Bevorzugt werden jedoch die modernen Auftragsverfahren unter Anwendung elektrischer Felder eingesetzt. Zum Beispiel kann der Auftrag durch Elektrophorese erfolgen. Die wäßrigen Systeme enthalten dann zur Verbesserung des Umgriffs vorzugsweise zusätzlich Aluminatverbindungen (z.B. gemäß GB-PS 1 228 434). Der Cermet-Schlicker enthält vorteilhaft ferner 3 bis 20 Gew.-%, vorzugsweise 5 bis 9 Gew.-%, bezogen auf den Gesamtfeststoffgehalt des Schlickers an organischen, wasserlöslichen, nach der Abscheidung elektrisch isolierenden Substanzen. Vorzugsweise wird ein durch Aminzusatz neutralisiertes wasserlösliches Acrylharz eingesetzt. Der Metallgegenstand wird bei diesem Auftragsverfahren zunächst in Beizbädern vorbehandelt, danach in einem weiteren Bad elektrophoretisch mit dem das Cermet erzeugenden System beschichtet, und gegebenenfalls nach Zwischentrocknung in einem weiteren Bad elektrophoretisch mit dem die Glasur erzeugenden System beschichtet. Danach können beide Systeme gemeinsam eingebrannt werden.

Vorteilhaft erfolgt die Herstellung der beschichteten Metallgegenstände auch indem das Glasur-System als trockenes Pulver elektrostatisch auf die feuchte oder trockene Schicht des das Cermet erzeugenden Systems aufgebracht wird. Der elektrische Widerstand der Frittenpulver wird dabei nach DE-OS 27 41 971 eingestellt. Beide Systeme können danach gemeinsam eingebrannt werden. Der pulverelektrostatische Auftrag des Glasur-Systems kann auch auf den bereits eingebrannten Cermet erfolgen.

Le A 19 422

Es wurde ferner gefunden, daß die erfindungsgemäßen Beschichtungen in hervorragender Weise zur Emaillierung von Guß durch Anwendung herkömmlicher Spritz- und Tauchverfahren, sowie der Verfahren unter Einsatz elektrischer Felder geeignet sind. Wegen des hohen Kohlenstoffgehaltes von Gußeisen und der damit verbundenen schlechten Benetzbarkeit und Blasenbildung während des Einbrandes sind diese nach dem Stand der Technik nur durch Aufpulvern der Emailfritte auf den auf Einbrandtemperaturen aufgeheizten Gußkörper emaillierbar. Das als Zwischenschicht auf den Gußkörper aufgebrachte, z.T. offenporige Cermet-System erlaubt offenbar den Durchtritt von beim Einbrand entstehenden Gasen ohne Blasenbildung. Indem also die Cermet-Zwischenschicht erfindungsgemäß bei der Gußemaillierung als Grundemailschicht eingesetzt wird, wird damit auch der Guß den modernen Emaillierverfahren unter Einsatz elektrischer Felder zugänglich. Auf die Cermet-Zwischenschicht können anstelle der hier beschriebenen silikatischen Glasursysteme auch beliebige Emailschichten aufgebracht werden. Bedingung ist lediglich, daß die Emailfritte beim Einbrand die darunterliegende Cermet-Beschichtung benetzt und eine geschlossene Schicht ausbildet.

Die Erfindung wird anhand der nachfolgenden Beispiele näher erläutert:

Le A 19 422

Beispiele 1 bis 6

a) Cermet-System

Aus handelsüblichen Rohstoffen, wie sie für die Emailherstellung verwendet werden, wurde bei 1250°C eine
Matrixfritte I folgender oxidischer Zusammensetzung
erschmolzen:

| | |
|---|---|
| $SiO_2$ | 51.0 |
| $B_2O_3$ | 16.5 |
| $Al_2O_3$ | 1.0 |
| $Na_2O$ | 12.0 |
| NaF | 1.0 |
| $K_2O$ | 1.0 |
| $Li_2O$ | 2.0 |
| CaO | 2.0 |
| BaO | 4.0 |
| $TiO_2$ | 5.0 |
| CoO | 2.0 |
| NiO | 2.0 |
| CuO | 0.5 |
| | 100.0 |

Die Schmelze wurde in Wasser abgeschreckt und getrocknet.
Ferner wurden aus handelsüblichen Rohstoffen, wie sie für
die Emailherstellung verwendet werden, bei 1350 bis 1400°C
die schwer schmelzende Fritte II folgender Zusammensetzung
erschmolzen:

Le A 19 422

| | |
|---|---|
| $SiO_2$ | 46.0 |
| $Na_2O$ | 9.0 |
| $K_2O$ | 2.0 |
| $CaO$ | 5.0 |
| $Fe_2O_3$ | 7.0 |
| $MnO$ | 1.0 |
| $CuO$ | 19.0 |
| $TiO_2$ | 6.0 |
| $ZrO_2$ | 5.0 |

Nach dem Abschrecken der Schmelze in Wasser und dem Trocknen der so erhaltenen Granalien wurden diese in einer Prozellankugelmühle zusammen mit der Matrixfritte I nach folgendem Mühlenversatz solange vermahlen, bis der Rückstand auf einem Sieb der Maschenweite 100 µm weniger als 3 % - bezogen auf den Feststoff - betrug:

| | | |
|---|---|---|
| Matrixfritte I | 50.0 | Teile |
| Fritte II | 50.0 | " |
| Emaillierton | 2.0 | " |
| Bentonit | 1.0 | " |
| Borsäure | 4.0 | " |
| Natriumnitrit | 0.2 | " |
| Wasser | 65.0 | " |

In diese so erhaltene Suspension wurden 40 Teile Aluminiumpulver mit einem Kornverteilungsmaximum zwischen 20 und 60 µm eingerührt.

Le A 19 422

Mit diesem Schlicker wurden sechs 100 x 100 mm große Stahlbleche mit einer Stärke von 1 mm, die in bekannter Weise für eine Emaillierung vorbereitet worden waren, durch Spritzauftrag beidseitig beschichtet und getrocknet. Die Schichtstärke wurde so gewählt, daß diese nach dem Einbrand ca. 150 µm betragen soll.

b) Glasur-System

Aus handelsüblichen Rohstoffen wurden die in Tabelle I angegebenen Glasurfritten bei den in der vorletzten Zeile der Tabelle angegebenen Temperaturen erschmolzen, abgeschreckt und getrocknet.

## Tabelle I

| Glasurfritte | Gew.-% | | | | | |
|---|---|---|---|---|---|---|
| | 1 | 2 | 3 | 4 | 5 | 6 |
| $SiO_2$ | 53 | 63 | 41 | 61 | 55 | 51 |
| $B_2O_3$ | 18 | 4 | – | 10 | 6 | – |
| $Al_2O_3$ | 1 | 1 | 3 | – | 11 | 14 |
| $Na_2O$ | 12 | 15 | 19 | 13 | 5 | 2 |
| $K_2O$ | 1 | 2 | 12 | – | – | – |
| $Li_2O$ | 2 | 3 | 2 | – | 10 | 9 |
| CaO | 2 | – | – | – | – | – |
| BaO | 4 | – | – | – | – | 10 |
| $TiO_2$ | 6 | 7 | 20 | 9 | 9 | 8 |
| $ZrO_2$ | – | 4 | – | – | – | – |
| $P_2O_5$ | – | – | 1 | – | – | 4 |
| $V_2O_5$ | – | – | 2 | – | – | – |
| $MoO_3$ | – | – | – | 1 | – | – |
| NaF | 1 | 1 | – | – | – | – |
| $CaF_2$ | – | – | – | 6 | 4 | 2 |
| Schmelztemperatur | 1250°C | 1300°C | 1150°C | 1300°C | 1150°C | 1250°C |
| Einbrandtemperatur | 820°C | 860°C | 790°C | 840°C | 820°C | 840°C |

Die Glasurfritten wurden mit dem nachfolgend angegebenen Mühlenversatz so lange vermahlen, bis der Rückstand auf einem Sieb der Maschenweite 40 $\mu$m weniger als 2 % des Feststoffgehaltes betrug:

| | |
|---|---|
| Fritte | 100 Gew.-Teile |
| Emaillierton | 4 Gew.-Teile |
| Bentonit | 0,2 Gew.-Teile |
| Borsäure | 0,2 Gew.-Teile |
| Natriumnitrit | 0,1 Gew.-Teile |
| Wasser | 60 Gew.-Teile |

Auf die gemäß a) erhaltenen sechs Stahlbleche, die mit dem getrockneten, das Cermet bildenden Schlicker beschichtet waren, wurde je ein die Glasurfritte enthaltender Schlicker durch Spritzen oder Tauchen so dünn aufgetragen, daß nach dem Einbrand bei der in Tabelle I angegebenen Temperatur während 5 Minuten jeweils eine geschlossene glasige Deckschicht einer durchschnittlichen Dicke von 15 bis 25 $\mu$m resultierte. Der Überzug zeigte eine geschlossene, chemisch gut beständige Oberfläche, die innig mit der darunter liegenden Cermet-Schicht verbunden war.

Beispiele 7 bis 12

a) Cermet-System

Es werden die Matrixfritte I und die Fritte II gemäß Beispielen 1a) bis 6 a) in folgendem Mühlenversatz eingesetzt:

Le A 19 422

Matrixfritte I        50 Gew.-Teile
Fritte II             50 Gew.-Teile
Carboxymethylzellulose    0,5 Gew.-Teile
Wasser            18 Gew.-Teile

Die Mischung wird so lange vermahlen, bis der Rückstand auf einem Sieb der Maschenweite 100 /um weniger als 3 % - bezogen auf den Feststoff - betrug. In die so erhaltene Suspension wurden 50 Gew.-Teile Aluminiumpulver mit einem Kornverteilungsmaximum zwischen 20 und 60 /um eingerührt, sowie 12 Gew.-Teile eines durch Aminzusatz neutralisierten wasserlöslichen Acrylharzes BAYCRYL L 461 W (Handelsprodukt der Bayer AG). Ferner wurden 4 Gew.-Teile Ölsäure und 25 Gew.-Teile Wasser zugegeben.

In das so erhaltene Elektrophoresebad werden 6 in üblicher Weise vorbehandelte Stahlbleche getaucht und anodisch geschaltet. Nach Erreichen der gewünschten Schichtdicke werden die Stahlbleche aus dem Bad entfernt und der niedergeschlagene Schlicker getrocknet.

b) Glasur-System

Die den getrockneten, das Cermet erzeugenden Biskuit enthaltenden Stahlbleche werden gemäß Beispiel 1b) bis 6b) mit je einem Glasur-Schlicker beschichtet und getrocknet. Danach werden beide Schichten gemeinsam eingebrannt.

Beispiele 13 bis 18

Die Beispiele 7 bis 12 wurden wiederholt, mit der Abweichung, daß der Gehalt an neutralisiertem, wasserlöslichem Acrylharz BAYCRYL L 461 W 5 Gew.-Teile und der Gehalt an Ölsäure 3 Gew.-Teile betrug.

Beispiele 19 bis 24

a) Cermet-System

Gemäß den Beispielen 7a) bis 12a) wird elektrophoretisch auf sechs Stahlbleche der das Cermet erzeugende Schlicker aufgebracht. Jedoch entfällt das Trocknen des aufgebrachten Schlickers.

b) Glasur-System

Je eine Fritte nach Tabelle I wird mit dem nachfolgenden Mühlenversatz bis zu einem Rückstand von weniger als 1 % auf einem Sieb der Maschenweite 40 $\mu$m vermahlen:

| | |
|---|---|
| Fritte | 100 Gew.-Teile |
| Bentonit | 0,5 Gew.-Teile |
| Natriumaluminat | 0,2 Gew.-Teile |
| Carboxymethylzellulose | 0,2 Gew.-Teile |
| Wasser | 50 Gew.-Teile |

Jedes der nach a) erhaltenen mit dem noch feuchten, das Cermet erzeugenden Schlicker versehene Stahlblech wird in einen der erhaltenen, das Glasur-System erzeugenden Schlicker getaucht, anodisch geschaltet und elektrophoretisch beschichtet. Die Stahlbleche werden getrocknet und beide Beschichtungen gemeinsam einge-

Le A 19 422

- 16 -

brannt. Die Stahlbleche zeigten danach eine geschlossene, chemisch gut beständige Oberfläche, wobei die obere Glasur-Schicht innig mit der darunter liegenden Cermet-Schicht verbunden war.

Beispiele 25 bis 30

a)   Cermet-System

Es werden die Matrixfritte I und die Glasurfritte 5 gemäß Tabelle I in folgendem Mühlenversatz eingesetzt:

Matrixfritte I              50 Gew.-Teile
Glasurfritte 5              50 Gew.-Teile
Carboxymethylcellulose       0,5 Gew.-Teile
Wasser                      18 Gew.-Teile

Die Mischung wird so lange vermahlen, bis der Rückstand auf einem Sieb der Maschenweite 100 µm weniger als 3 % - bezogen auf den Feststoff - betrug. In die so erhaltene Suspension wurden 50 Gew.-Teile Aluminiumpulver mit einem Kornverteilungsmaximum zwischen 20 und 60 µm eingerührt, sowie 12 Gew.-Teile eines durch Aminzusatz neutralisierten wasserlöslichen Acrylharzes BAYCRYL L 561 W (Handelsprodukt der Bayer AG). Ferner wurden 4 Gew.-Teile Ölsäure und 25 Gew.-Teile Wasser zugegeben.

In das so erhaltene Elektrophoresebad werden 6 in üblicher Weise vorbehandelte Stahlbleche getaucht und

Le A 19 422

anodisch geschaltet. Nach Erreichen der gewünschten
Schichtdicke werden die Stahlbleche aus dem Bad entfernt und der niedergeschlagene Schlicker getrocknet.

b)   Glasur-System

Die den getrockneten, das Cermet erzeugenden Bisquit
enthaltenden Stahlbleche werden gemäß Beispiel 1b)
bis 6b) mit je einem Glasur-Schlicker beschichtet
und getrocknet. Danach werden beide Schichten gemeinsam eingebrannt.

Bei diesen Beispielen 25 bis 30 wurde jeweils die Fritte
II aus den Beispielen 7 bis 12 durch eine kristallisierende Fritte ersetzt. Dadurch werden die mechanischen Eigenschaften der Beschichtungen gegenüber denen gemäß Beispielen 7 bis 12 noch verbessert. Graduelle Verbesserungen werden durch teilweisen Ersatz erreicht. Wegen des $Li_2O$-Ge-
haltes der kristallisierenden Fritten sind diese aber vergleichsweise teuer, so daß deren Einsatz nur bei sehr extremen Anforderungen gerechtfertigt ist.

Bewertung der beschichteten Metallgegenstände gemäß Beispiel 1 bis 30:

Die in den Beispielen erhaltenen beschichteten Stahlplatten wurden folgenden Tests unterzogen:

<u>Le A 19 422</u>

### a) Temperaturwechselbehandlung:

Die Stahlbleche wurden 10mal auf eine Temperatur von 700$^o$C erhitzt und jeweils 2 Stunden bei dieser Temperatur gehalten, wobei die Stahlbleche zwischen je zwei Wärmebehandlungen an Luft bis auf Zimmertemperatur abgekühlt wurden. Ferner wurden die Stahlbleche ebenfalls zehnmal auf eine Temperatur von 550$^o$C aufgeheizt und durch Eintauchen in kaltes Wasser auf 20$^o$C abgeschreckt.

### b) Sprühnebelbehandlung:

Die Stahlbleche wurden 7 Tage lang einer Sprühnebelbehandlung mit einer 5-%igen Natriumchloridlösung (gemäß SS DIN 50 021, Ausgabe Mai 1975, entsprechend ASTM-Designation B 111-73 "Standard Method of Salt Spray (fog) Testing") ausgesetzt.

### c) Schwitzwasser-Wechselklima:

Die Proben wurden in einer Kammer mit einem Volumen von 300 l zunächst 8 Stunden einer Temperatur von 40$^o$C und einer rel. Luftfeuchtigkeit von 100 % und anschließend 16 Stunden der Raumtemperatur und einer rel. Luftfeuchtigkeit von 75 % ausgesetzt, wobei vor dem Aufheizen 2 l SO$_2$ in die Kammer eingeleitet wurden (nach SFW 2,0 S DIN 50018, Ausgabe Dezember 1963). Der Behandlungszyklus wurden 5mal wiederholt.

### d) Säurebehandlung: Zitronensäure

Die Proben wurden nach DIN 51 151 2,5 Stunden lang in 6-%iger Zitronensäure gekocht.

Le A 19 422

e) Säurebehandlung: Schwefelsäure

Die Proben wurden in einer Apparatur nach DIN 51 157,
Blatt 2, 2,5 Stunden lang in 0,5 %iger Schwefelsäure
gekocht.

f) Biegetest

Die beschichteten Stahlbleche wurden um ein Stahlrohr von 50 mm Durchmesser um 90° gebogen. Das Stahlblech wurde nach Beschädigungen der Beschichtung untersucht.

Ergebnis:

Bei keiner der Proben konnte eine Veränderung der
Schicht bzw. des metallischen Substrates aufgrund der
Temperaturbehandlung festgestellt werden. Beschädigungen oder Risse aufgrund der Abschreckbehandlung und des
Biegetests waren nicht zu beobachten.

Nach der Sprühnebelbehandlung konnte bei keiner Probe
ein Korrosionsangriff festgestellt werden. Nach dem
Schwitzwasser-Wechselklimatest zeigten die Proben keine
Veränderung. Auch eine metallographische Untersuchung
ergab keine korrosive Veränderung der Schicht und
keinen Korrosionsangriff auf das Substrat. Der Flächengewichtsverlust nach den Säurebehandlungen war jeweils
geringer als 10 $g/m^2$. An dem metallischen Substrat
wurde kein Säureangriff festgestellt.

Le A 19 422

## Patentansprüche

1. Beschichteter Metallgegenstand mit geschlossener Oberfläche, gekennzeichnet durch eine erste Schicht aus einem Cermet und eine zweite, chemisch und korrosions-beständige silikatische Glasur.

2. Gegenstand nach Anspruch 1, dadurch gekennzeichnet, daß die silikatische Glasur eine durchschnittliche Schichtdicke von 15 bis 25 $\mu$m aufweist.

3. Gegenstand nach Anspruch 1 oder 2, dadurch gekennzeichnet, daß die silikatische Glasur eine Mindestschichtdicke von 5 $\mu$m aufweist.

4. Gegenstand nach einem der Ansprüche 1 bis 3, dadurch gekennzeichnet, daß die silikatische Glasur folgende Zusammensetzung aufweist:

| | |
|---|---|
| $SiO_2$ | 40 - 65 Gew.-% |
| $B_2O_3$ | 0 - 20 Gew.-% |
| $Al_2O_3$ | 0 - 5 Gew.-% |
| Alkalioxide | 10 - 35 Gew.-% |
| Erdalkalioxide | 0 - 20 Gew.-% |
| $TiO_2$ und/oder $ZrO_2$ | 0 - 20 Gew.-% |
| $P_2O_5$ | 0 - 2 Gew.-% |
| $V_2O_5$ und/oder $MoO_3$ | 0 - 3 Gew.-% |
| F | 0 - 5 Gew.-%. |

5. Gegenstand nach einem der Ansprüche 1 bis 3, dadurch gekennzeichnet, daß die silikatische Glasur zumindest teilweise durch eine Spodumen bzw. ß-Eukryptit ausscheidende kristallisierende Fritte erzeugt wird.

6. Verfahren zur Herstellung des beschichteten Metallgegenstandes nach einem der Ansprüche 1 bis 5, dadurch gekennzeichnet, daß zunächst ein das Cermet erzeugendes erstes System auf dem Metallgegenstand aufgetragen wird, und danach gegebenenfalls nach Einbrand des ersten Systems ein zweites die Glasur erzeugendes System aufgetragen und eingebrannt wird.

7. Verfahren nach Anspruch 6, dadurch gekennzeichnet, daß das erste System in Form eines wäßrigen Schlikkers durch Elektrophorese aufgetragen wird.

8. Verfahren nach Anspruch 7, dadurch gekennzeichnet, daß der wäßrige Schlicker 3 bis 20 Gew.-%, vorzugsweise 5 bis 9 Gew.-%, bezogen auf den Gesamtfeststoffgehalt einer organischen, wasserlöslichen, nach der Abscheidung elektrisch isolierenden Substanz enthält.

9. Verfahren nach Anspruch 7 oder 8, dadurch gekennzeichnet, daß das zweite System in einem zweiten Elektrophorese-Schritt in Form eines wäßrigen Schlikkers vor dem Einbrand des ersten Systems aufgetragen wird und danach beide Systeme gemeinsam eingebrannt werden.

Le A 19 422

10. Verfahren zur Emaillierung von Gußeisen, dadurch
gekennzeichnet, daß ein herkömmliches Spritz- oder
Tauchverfahren oder Verfahren unter Einsatz
elektrischer Felder für den Emailauftrag eingesetzt
wird und als Grundemail ein Cermet-System eingesetzt
wird.

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | US - A - 2 857 292 (D.G. MOORE) + Spalte 2, Zeilen 18-43; Spalte 3, Zeilen 21-28; Spalte 5, Zeilen 22-37; Spalte 6, Zeilen 63-66; Fig. 1 + -- | 1,2,6 |
| D,A | EP - A1 - 0 013 906 (BAYER AG) + Patentansprüche 1,3,7 + ---- | 1,4,6 |

**KLASSIFIKATION DER ANMELDUNG (Int. Cl.³)**

C 23 D   5/00
C 23 D   5/10
C 03 C   7/00
C 25 D  13/02

**RECHERCHIERTE SACHGEBIETE (Int. Cl.³)**

C 23 D
C 03 C
C 23 F
C 25 D

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| WIEN | 25-05-1981 | HAUSWIRTH |

EPA form 1503.1   06.78